# DEMANDE DE BREVET EUROPEEN

(11) **EP 1 400 271 A1**
(43) Date de publication de la demande: **24.03.2004**
(21) Numéro de dépôt: 03292176.9
(22) Date de dépôt: 04.09.2003
(51) Int. Cl.: B01D 36/00, B01D 35/143

(54) **Filtre à gazole comportant un détecteur d'eau**

(30) Priorité: 17.09.2002 FR 0211505
(71) Demandeur: Filtrauto Italia S.r.l., 10050 Sant'Antonino Di Susa (Torino) (IT)
(72) Inventeur: Bastiment, Marie-Laure, 78320 Le Mesnil Saint Denis (FR); Berland, Yann, 78280 Guyancourt (FR); Fremont, Laurent, 28410 Bu (FR)
(74) Mandataire: Garel, Régis

(57) **Abrégé**

Filtre à gazole comprenant un boîtier (2) qui délimite un volume intérieur comportant un élément filtrant (9) s'étendant entre une extrémité supérieure située au voisinage d'une partie supérieure (3) du boîtier et une extrémité inférieure disposée au voisinage d'une partie inférieure (11) du boîtier, ledit boîtier (2) comprenant également une partie médiane (7). Le boîtier comprend un circuit imprimé et un détecteur d'eau (18) formé par deux électrodes (19,20) qui s'étendent entre des extrémités inférieures (19b,20b) et des extrémités supérieures (19a,20a), les deux électrodes (19,20) comportant chacune une portion centrale (19c,20c) recouverte par un matériau isolant solidaire de la paroi, interne de la partie médiane (7) du boîtier.

## Description

La présente invention se rapporte aux filtres à gazole comportant un détecteur d'eau.

Plus particulièrement, l'invention concerne parmi ces filtres à gazole, ceux qui comprennent un boîtier qui délimite un volume intérieur comportant, d'une part, une zone d'amont communiquant avec une entrée de gazole, et d'autre part, une zone d'aval séparée de la zone d'amont par un élément filtrant remplaçable et communiquant avec une sortie de gazole, ledit élément filtrant s'étendant entre une extrémité supérieure située au voisinage d'une partie supérieure du boîtier et une extrémité inférieure disposée au voisinage d'une partie inférieure du boîtier qui forme une zone de collecte d'eau dans laquelle est disposé un détecteur d'eau, ledit boîtier comprenant également une partie médiane présentant une paroi interne de forme sensiblement annulaire disposée autour d'un axe central et qui s'étend entre lesdites parties supérieure et inférieure, ledit boîtier étant adapté pour qu'au moins la partie inférieure du boîtier soit montée amovible pour permettre le remplacement de l'élément filtrant.

De manière connue en soi, les filtres à gazole de ce type comportent un détecteur d'eau qui comprend un bloc vissé sur le fond du filtre formé par sa partie inférieure, le détecteur comprenant également deux électrodes qui s'étendent à partir du bloc et qui sont disposées dans la zone de collecte d'eau. Le bloc du détecteur d'eau directement vissé sur la partie inférieure du filtre est relié par liaison filière à un calculateur ou circuit imprimé externe au boîtier du filtre et qui permet la détection de la variation de résistivité du fluide au contact des deux électrodes plongées dans la zone de collecte d'eau du filtre.

La partie inférieure du boîtier étant montée amovible pour permettre le remplacement de l'élément filtrant, il est donc impératif de dévisser tout d'abord le détecteur d'eau formé par le bloc et les deux électrodes qui y sont rapportées avant de démonter la partie inférieure du boîtier du reste du boîtier pour permettre le remplacement de l'élément filtrant usager par un nouvel élément filtrant. On comprend donc que le remplacement de l'élément filtrant usagé par un nouvel élément filtrant nécessite, en plus du dévissage et de revissagé de la partie inférieure du boîtier, une opération de dévissage et de revissage du détecteur d'eau à l'intérieur même du moteur diesel où l'espace est relativement restreint pour un opérateur.

La présente invention a notamment pour but de pallier ces inconvénients.

A cet effet, selon l'invention, un filtre à gazole du genre en question est caractérisé en ce que le détecteur d'eau comprend deux électrodes qui s'étendent entre des extrémités inférieures situées dans la zone de collecte d'eau et des extrémités supérieures connectées électriquement à une plaque de circuit imprimé disposée dans la partie supérieure du boîtier, et en ce que les deux électrodes comportent chacune une portion centrale recouverte par un matériau isolant solidaire de la paroi interne de la partie médiane du boîtier.

Grâce à ces dispositions, le détecteur d'eau ainsi que le circuit imprimé ou calculateur permettant la détection, sont directement intégrés au sein du boîtier du filtre, ce qui évite toute opération de vissage et de dévissage du détecteur d'eau préalablement au remplacement de l'élément filtrant.

Dans des modes de réalisation préférés de l'invention, on peut éventuellement avoir recours en outre à l'une et/ou à l'autre des dispositions suivantes :
- la partie supérieure, du boîtier comprend un connecteur externe qui comporte des broches traversant avec étanchéité le boîtier du filtre et s'étendant jusqu'à des extrémités intérieures situées dans le volume intérieur du boîtier, la plaque de circuit imprimé comportant par ailleurs des broches complémentaires qui coopèrent avec les extrémités intérieures des broches du connecteur externe pour raccorder électriquement la plaque de circuit imprimé avec ledit connecteur externe ;
- la plaque de circuit imprimé est rapportée sur des plots qui s'étendent vers le bas depuis la partie supérieure du boîtier, ladite plaque de circuit imprimé s'étendant sensiblement perpendiculairement à l'axe central et au-dessus de l'élément filtrant ;
- les deux électrodes sont directement moulées dans une languette plastique solidarisée avec la paroi interne de la partie médiane du boîtier ;
- les deux électrodes sont directement moulées dans la paroi interne de la partie médiane du boîtier ;
- les parties supérieure et médiane du boîtier sont réalisées d'une seule pièce tandis que la partie inférieure dudit boîtier est rapportée de manière amovible sur la partie médiane du boîtier et les extrémités supérieures des deux électrodes sont fixées sur la plaque de circuit imprimé ;
- les parties inférieure et médiane du boîtier sont solidaires l'une de l'autre et la partie médiane est montée de manière amovible sur la partie supérieure du boîtier, les extrémités supérieures des deux électrodes étant solidaires de l'extrémité supérieure de la partie médiane du boîtier, et dans lequel le circuit imprimé comporte deux organes de connexion sollicités élastiquement contre les extrémités supérieures des deux électrodes, lors de la mise en place de la partie médiane du boîtier sur la partie supérieure ; et
- l'élément filtrant présente une forme annulaire et délimite intérieurement la zone d'aval qui communique de manière étanche avec un conduit central réalisé sur la partie supérieure du boîtier et qui forme la sortie de gazole, la plaque de circuit imprimé étant disposée autour de ce conduit central.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue en élévation d'un filtre à gazole conformément à une première forme de réalisation de l'invention,
- la figure 2 est une vue en coupe verticale du filtre à gazole représenté sur la figure 1,
- la figure 3 est une vue en coupe selon la ligne III-III de la figure 2,
- la figure 4 est une vue partielle en coupe selon la ligne IV-IV de la figure 2,
- la figure 5 est une vue en coupe verticale du filtre à gazole selon une deuxième forme de réalisation de l'invention, et
- la figure 6 est une vue schématique en perspective montrant partiellement la connexion du détecteur d'eau au circuit imprimé logé dans la partie supérieure du filtre à gazole selon la deuxième forme de réalisation de l'invention.

Sur les différentes figures, les mêmes références désignent des éléments identiques ou similaires.

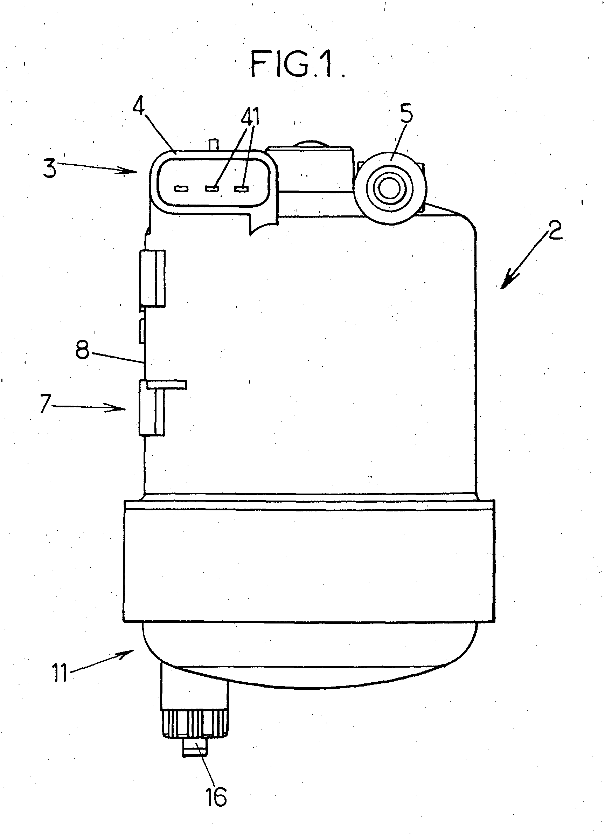

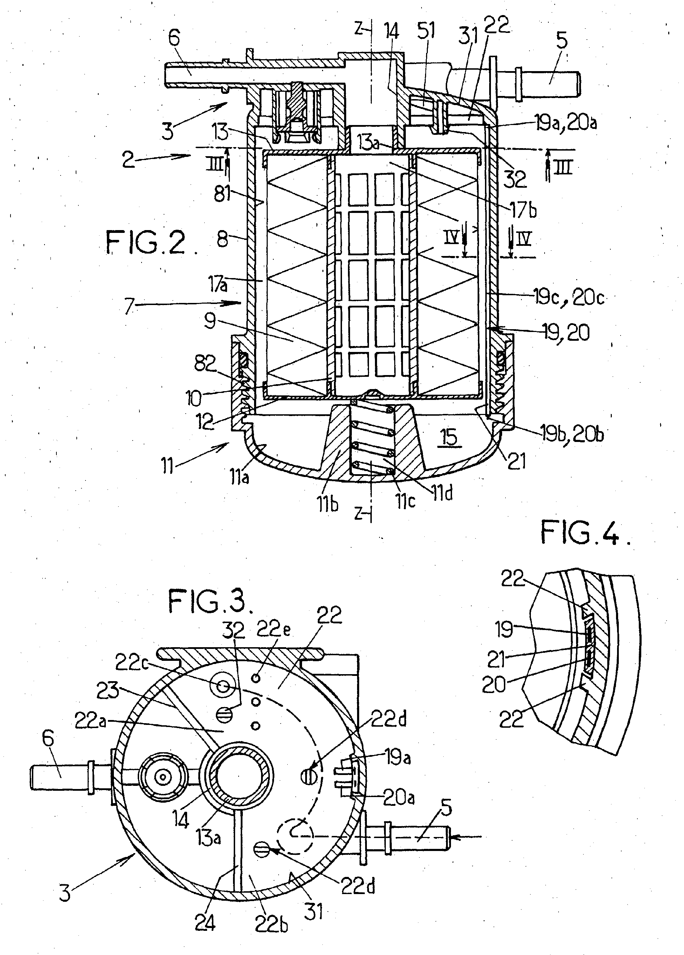

Les figures 1 et 2 représentent schématiquement un filtre à gazole 1 pour véhicule automobile à moteur diesel qui comporte un boîtier 2 présentant une partie supérieure 3 comprenant un connecteur électrique externe 4, une entrée de gazole 5 ainsi qu'une sortie de gazole 6.

Le boîtier rigide 2 comprend également une partie médiane 7 formée par un élément tubulaire 8 de fprme cylindrique de révolution autour d'un axe vertical Z, cet élément tubulaire 8 présentant une paroi interne 81 délimitant une enceinte dans laquelle est disposé un élément filtrant 9.

Dans cette première réalisation de l'invention, l'élément tubulaire 8 présente une portion d'extrémité supérieure ouverte réalisée d'une seule pièce avec la partie supérieure 3 du boîtier 2, et l'élément tubulaire s'étend vers le bas jusqu'à une extrémité inférieure 82 pourvue d'un filetage destiné à coopérer par vissage avec un taraudage réalisé sur la paroi interne 11a de la partie inférieure 11 du boîtier. Cette partie inférieure 11 forme avec la portion inférieure 82 de l'élément tubulaire 8, une zone de collecte d'eau 15 qui communique avec un dispositif de purge 16 (figure 1) connu en soi. La partie inférieure 11 du boîtier peut être dévissée de la partie médiane 7 afin de remplacer l'élément filtrant 9 usagé par un nouvel élément filtrant. La paroi interne 11a de la partie inférieure 11 comprend également une pluralité de pattes 11b délimitant un logement 11d dans lequel peut être logé à demeure un ressort 11c qui prend appui contre l'élément filtrant 9 et qui le sollicite élastiquement vers le haut lorsque la partie inférieure 11 est vissée sur l'extrémité inférieure 82 de l'élément tubulaire 8.

Selon une autre variante de réalisation, l'élément filtrant 9 peut également prendre directement appui sur la pluralité de pattes 11b qui assure ainsi un support lorsque la partie inférieure 11 est vissée sur l'extrémité 'inférieure 82 de l'élément tubulaire.

Ainsi, les parties supérieure 3, médiane 2 et inférieure 11 du boîtier 2 délimitent un volume intérieur dans lequel est disposé l'élément filtrant 9. Cet élément filtrant'9 peut être réalisé en papier plissé et présente une forme annulaire centrée sur l'axe de révolution Z. L'élément filtrant est classiquement disposé autour d'un tube perforé 10 qui délimite un espace intérieur creux. L'élément filtrant s'étend également entre une extrémité inférieure sur laquelle est rapporté un flasque inférieur 12 étanche qui obture vers le bas l'espace intérieur creux, et une extrémité supérieure sur laquelle est rapporté un flasque supérieur 13 qui présente un raccord supérieur 13a engagé de manière étanche dans un conduit central 14 qui communique avec la sortie de gazole 6.

Selon encore une autre variante du système de maintien de l'élément filtrant 9 dans l'élément tubulaire 8, on peut également prévoir de monter serré le raccord supérieur 13a du flasque supérieur 13 de l'élément filtrant 9 à l'intérieur du conduit central 14 de la partie supérieure 3 réalisée d'une seule pièce avec l'élément tubulaire 8.

Ainsi, l'élément filtrant 9 est interposé entre :
- l'entrée de gazole 5 qui communique par l'intermédiaire d'un orifice 51 avec l'extérieur de l'élément filtrant 9, en formant une zone d'amont 17a,
- et le conduit central 14 qui est relié à la sortie de gazole 6 et qui communique avec l'espace intérieur de l'élément,filtrant en formant une zone d'aval 17b qui recueille le gazole filtré.

Le boîtier 2 comprend également un détecteur d'eau 18 placé dans la chambre ou zone d'amont 17a et qui est destiné à permettre la détection d'un certain niveau d'eau dans la chambre de collecte d'eau 15 délimitée par la partie inférieure 11 du boîtier 2.

Ce détecteur d'eau 18, comme on peut le voir plus en détail sur la figure 4, comprend deux électrodes 19 et 20 qui s'étendent chacune entre une extrémité supérieure 19a, 20a disposée au niveau de l'extrémité supérieure de l'élément tubulaire 8, et une extrémité inférieure 19b, 20b située au niveau de l'extrémité inférieure de l'élément tubulaire 8 et dans la zone de collecte d'eau 15 de la partie,inférieure 11 du boîtier. Les deux électrodes 19, 20 comprennent également une partie centrale 19c, 20c recouvertes par un matériau isolant tel que du plastique se présentant sous la forme d'une languette 21 sensiblement rectiligne qui est directement solidarisée avec la paroi interne 81 de l'élément tubulaire 8.

Cette languette 21 en plastique est directement surmoulée sur les deux électrodes hormis au niveau de leurs extrémités supérieure et inférieure, ce matériau plastique de recouvrement étant ensuite fixé sur la paroi interne 81 du boîtier par clipsage sur des plots prévus sur ladite paroi interne 81 de l'élément tubulaire 8. La languette 21 peut également être fixée au moyen d'une pluralité d'éléments saillants 22 venus de matière avec la paroi interne 81 et rabattus de part et d'autre de ladite languette 21.

Selon une variante de la première forme de réalisation de l'invention, les électrodes 19, 20 du détecteur 18 peuvent également être directement noyées dans la paroi interne 81 de l'élément tubulaire lors de la réalisation de ce dernier, par moulage d'un matériau isolant. Bien entendu, dans ce cas, seules les extrémités inférieures 19b, 20b et supérieures 19a, 20a des deux électrodes ne seront pas noyées afin,de permettre la mesure de résistivité au niveau de la zone de collecte d'eau 15.

Les extrémités supérieures 19a, 20a des deux électrodes 19, 20 sont connectées électriquement à un circuit imprimé 22 ou calculateur directement disposé dans la partie supérieure 3 du boîtier 2.

Ainsi, tant que les deux électrodes 19, 20 ou plus précisément les extrémités inférieures 19b, 20b des deux électrodes sont entièrement immergées dans le gazole, elles sont sensiblement isolées électriquement l'une de l'autre compte tenu du caractère isolant du gazole, mais dès que le niveau d'eau dans la chambre de collecte d'eau 15 atteint les extrémités inférieures 19b, 20b de ces deux électrodes, la résistance électrique entre lesdites deux électrodes 19, 20 chute brutalement, ce qui est détecté par le circuit imprimé 22 relié aux deux électrodes 19, 20.

Comme on peut le voir sur la figure 3, le circuit imprimé 22 se présente sous la forme d'une plaque de faible épaisseur qui est disposée au moins en partie autour du conduit central 14 relié à la sortie de gazole 6. Cette plaque de circuit imprimé 22 prend également appui contre la paroi interne 31 de la partie supérieure 3 du boîtier 2.

La plaque de circuit imprimé 22 s'étend également circonférentiellement entre deux bords d'extrémité 22a, 22b qui viennent au contact de deux nervures 23 et 24 reliant radialement le conduit central 14 à la paroi interne 31 de la partie supérieure 3 du boîtier 2.

Comme on peut le voir également sur les figures 2 et 3, la plaque de circuit imprimé 22 est disposée au regard de l'orifice d'entrée 51 de gazole et ladite plaque 22 forme avec les nervures 23 et 24 et la paroi interne 31 de la partie supérieure 3, une chambre de réception pour le gazole. Afin d'amener le gazole en direction de l'élément filtrant 9, la plaque de circuit imprimé présente un trou traversant 22c qui permet la communication entre la chambre de réception de gazole et l'enceinte annulaire qui entoure l'élément filtrant 9 vers l'extérieur. Ce trou traversant 22c de la plaque de circuit imprimé 22 peut être avantageusement pourvu d'un système de préchauffage de gazole, préalablement à sa filtration par ledit élément filtrant 9. Dans ce cas, la plaque de circuit imprimé 22 est pourvue d'un capteur de température de gazole (non représenté) rapporté sur la plaque de circuit imprimé 22 et à l'intérieur de la chambre de réception de gazole.

Afin de maintenir la plaque de circuit imprimé sur la partie supérieure 3 du boîtier 2, ladite plaque est pourvue d'une pluralité de trous traversants 22d qui viennent s'emboîter, par exemple par clipsage, sur des plots 32 qui s'étendent vers le bas depuis la paroi interne 31 de la partie supérieure 3 du boîtier.

On peut également prévoir de fixer la plaque de circuit imprimé 22 sur la partie supérieure 3 du boîtier 2, en engageant les trous traversants 22d autour des plots 32 et en rapportant des vis (non représentées) dans les plots 32 afin de solidariser ladite plaque de circuit imprimé 22 à la partie supérieure 3.

Afin d'alimenter électriquement la plaque de circuit imprimé 22 reliée aux électrodes 19, 20, le connecteur externe 4 (figure 1) comporte des broches 41 qui traversent avec étanchéité la partie supérieure 3 du boîtier et qui s'étendent jusqu'à des extrémités intérieures (non représentées) situées dans la chambre de réception de gazole; la plaque de circuit imprimé 22 comportant par ailleurs des broches complémentaires 22e qui coopèrent avec les extrémités intérieures des broches 41 du connecteur externe 4 pour raccorder électriquement ladite plaque de circuit imprimé 22 avec le connecteur externe 4.

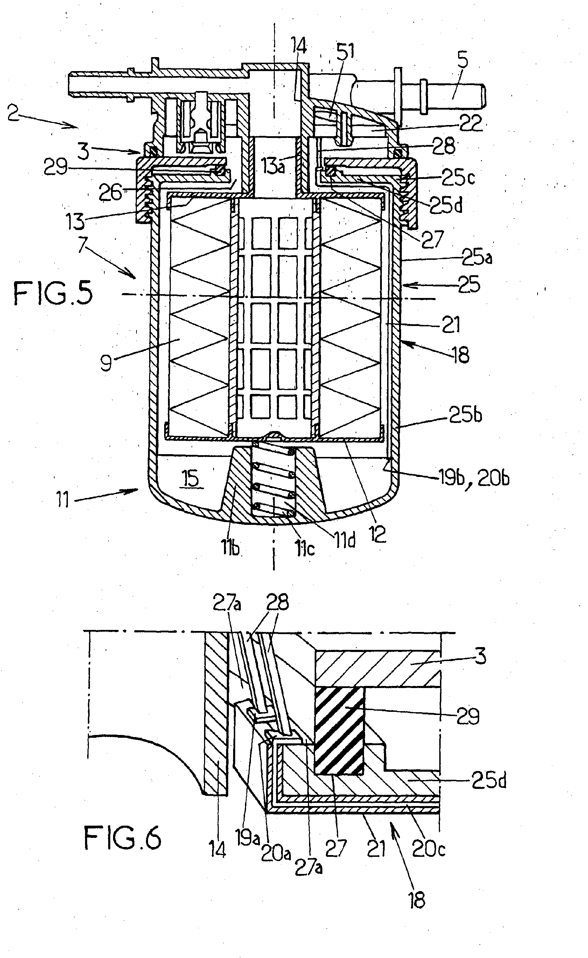

Selon une seconde forme de réalisation de l'invention représentée sur les figures 5 et 6, la partie médiane 7 ainsi que la partie inférieure 11 du boîtier 2 sont montées de manière amovible par rapport à la partie supérieure 3 qui comprend le connecteur externe 4, l'entrée de gazole 5 et la sortie de gazole 6.

La partie inférieure, 11 qui forme le fond du boîtier 2 peut être fixée par,vissage, par des vis ou par soudure, notamment ultrasons à l'extrémité inférieure de la partie médiane 7. Dans l'exemple considéré sur la figure 5, la partie inférieure 11 est directement venue de matière avec la partie médiane 7. La partie inférieure 11 du boîtier 2 présente une zone de collecte d'eau 15 qui communique également avec un dispositif de purge (non représenté).

Cette partie médiane 7 se présente sous la forme d'une cartouche rechargeable 25 dans laquelle est disposé l'élément filtrant 9. La cartouche rechargeable 25 comprend une portion tubulaire 25a qui s'étend vers le bas jusqu'à une extrémité inférieure 25b venue de matière avec la partie inférieure 11 et vers le haut jusqu'à une extrémité supérieure 25c qui comprend un couvercle 25d présentant une ouverture 26 centrée sur l'axe vertical Z du boîtier 2.

L'extrémité supérieure 25c de la cartouche rechargeable 25 peut par exemple présenter un filetage externe destiné à coopérer par vissage avec un taraudage réalisé sur la paroi interne de la partie supérieure 3 du boîtier 2.

Le couvercle 25d peut, par exemple, être réalisé par thermo-formage après introduction de l'élément filtrant 9 à l'intérieur de la portion tubulaire 25a de la cartouche rechargeable 25.

Comme on peut le voir sur la figure 5, le couvercle ouvert 25d de la cartouche rechargeable 25 peut par exemple présenter une gorge 27 centrée sur l'axe vertical Z et dans laquelle est logé un joint 25 destiné à venir en contact étanche contre la partie supérieure 3 lors du vissage de la cartouche rechargeable 25.

Lorsque la cartouche rechargeable 25 est vissée sur la partie supérieure 3, le conduit central 14 de la partie supérieure 3 s'emboîte de manière étanche avec le raccord supérieur 13a du flasque supérieur 13 de l'élément filtrant 9, par la sollicitation élastique du ressort 11c placé dans le logement 11d de la partie inférieure 11 formant le fond de la cartouche rechargeable 25.

Néanmoins, selon une autre variante de réalisation, le ressort 11c peut être supprimé et l'élément filtrant 9 prend alors appui sur les pattes 11b délimitant le logement 11d lorsque le raccord supérieur 13a de l'élément filtrant 9 s'emboîte de manière étanche avec le conduit central 14 de la partie supérieure 3.

L'ouverture traversante 26 du couvercle 25d de la cartouche rechargeable 25 est dimensionnée de manière à former un espace annulaire entre le couvercle 25d et le conduit central 14 de la partie supérieure 3 du boîtier 2.

Ainsi, le gazole arrivant dans le boîtier 2 par l'orifice 51 réalisé sur la partie supérieure 3, s'engage dans la cartouche rechargeable 25 par l'ouverture 26 afin d'être filtré par l'élément filtrant 9.

Dans cette seconde forme de réalisation, le détecteur 18 comprend également deux électrodes 19, 20 qui s'étendent chacune entre une extrémité inférieure 19b, 20b disposée au niveau de l'extrémité inférieure 25b de la cartouche rechargeable 25, et une extrémité supérieure 19a, 20a disposée au niveau de l'extrémité supérieure de la cartouche rechargeable 25.

Plus précisément, et comme on peut le voir sur la figure 6, les extrémités 19a, 20a des deux électrodes 19, 20 sont disposées sur le rebord radialement interne 27a qui délimite l'ouverture 26 mais également la limite radialement interne de la gorge circulaire 27 dans laquelle est rapporté le joint 28.

Dans le mode de réalisation représenté sur les figures 5 et 6, les deux électrodes 19, 20 sont noyées dans une languette 21 réalisée en matière plastique hormis au niveau des extrémités inférieures 19b, 20b et supérieures 19a, 20a des deux électrodes. Cette languette 21 est rapportée de manière fixe contre la paroi interne de la portion médiane 25a de la cartouche rechargeable 25, mais également contre le couvercle 25d et contre le contour qui délimite l'ouverture 26 du couvercle 25d.

La fixation de là languette en plastique 21 sur la cartouche rechargeable 25 peut être réalisée au moyen de plots prévus sur la paroi interne de la cartouche rechargeable 25, par exemple par clipsage, ou bien alors au moyen d'éléments saillants venus de matière avec la paroi interne de l'élément rechargeable 25, ces éléments saillants étant rabattus de part et d'autre de la languette 21.

Selon une autre variante de réalisation, les électrodes 19,20 du détecteur 18 peuvent également être directement noyées dans la paroi interne de la cartouche rechargeable 25 lors de la réalisation de cette dernière par moulage d'un matériau isolant. Dans ce cas, seules les extrémités inférieures 19b, 20b et supérieures 19a,20a des deux électrodes ne seront pas noyées afin de permettre la mesure de résistivité au niveau de la zone de collecte d'eau 15.

Afin de relier électriquement les deux extrémités supérieures 19a, 20a des deux électrodes au circuit imprimé disposé dans la partie supérieure 3 conformément à la première forme de réalisation, le circuit imprimé ou plus exactement la plaque de circuit imprimé présente au niveau de sa face inférieure deux organes de connexion 28 (voir figure 6) qui sont sollicités élastiquement contre les extrémités supérieures 19a, 20a des deux électrodes lorsque la cartouche rechargeable 25, est fixée sur la partie supérieure 3 du boîtier 2. Ces deux organes de connexion 28 peuvent se présenter sous la forme de broches élastiquement déformables qui prennent appui contre le rebord saillant et radialement interne 27a de la cartouche rechargeable 25 lors du vissage de cette dernière sur la partie supérieure 3. Afin que les broches élastiques 28 ou lame ressort viennent se positionner sur les extrémités supérieures 19a, 20a des deux électrodes, l'extrémité supérieure 25c de la cartouche rechargeable 25 et la partie supérieure 3 du boîtier 2 peuvent être pourvues de moyens d'indexage angulaire assurant un positionnement précis desdites broches élastiques 28 respectivement sur les extrémités supérieures 19a, 20a des deux électrodes.

## Revendications

1. Filtre à gazole comprenant un boîtier (2) qui délimite un volume intérieur comportant, d'une part, une zone d'amont (17a) communiquant avec une entrée (5) de gazole, et d'autre part, une zone d'aval (17b) séparée de la zone d'amont (17a) par un élément filtrant remplaçable (9) et communiquant avec une sortie (6) de gazole, ledit élément filtrant (9) s'étendant entre une extrémité supérieure située au voisinage d'une partie supérieure (3) du boîtier et une extrémité inférieure disposée au voisinage d'une partie inférieure (11) du boîtier qui forme une zone de collecte d'eau (15) dans laquelle est disposé un détecteur d'eau (18), ledit boîtier (2) comprenant également une partie médiane (7) présentant une paroi interne (81) de forme sensiblement annulaire disposée autour d'un axe central (Z) et qui s'étend entre lesdites parties supérieure (3) et inférieure (11), ledit boîtier étant adapté pour qu'au moins la partie inférieure (11) du boîtier soit montée amovible pour permettre le remplacement de l'élément filtrant,
**caractérisé en ce que** le détecteur d'eau (18) comprend deux électrodes (19,20) qui s'étendent entre des extrémités inférieures (19b,20b) situées dans la zone de collecte d'eau (15) et des extrémités supérieures (19a,20a) connectées électriquement à une plaque de circuit imprimé (22) disposée dans la partie supérieure (3) du boîtier, et **en ce que** les deux électrodes (19,20) comportent chacune une portion centrale (19c,20c) recouverte par un matériau isolant solidaire de la paroi interne de la partie médiane (7) du boîtier.

2. Filtre selon la revendication 1, dans lequel la partie supérieure (3) du boîtier comprend un connecteur externe (4) qui comporte des broches (41) traversant avec étanchéité le boîtier du filtre et s'étendant jusqu' à des extrémités intérieures situées dans le volume intérieur du boîtier, la plaque de circuit imprimé (22) comportant par ailleurs des broches complémentaires (22e) qui coopèrent avec les extrémités intérieures des broches (41) du connecteur externe (4) pour raccorder électriquement la plaque de circuit imprimé (22) avec ledit connecteur externe (4).

3. Filtre selon l'une ou l'autre des revendications 1 et 2, dans lequel la plaque de circuit imprimé (22) est rapportée sur des plots (32) qui s'étendent vers le bas depuis la partie supérieure (3) du boîtier, ladite plaque de circuit imprimé (22) s'étendant sensiblement perpendiculairement à l'axé central (Z) et au-dessus de l'élément filtrant (9).

4. Filtre selon l'une quelconque des revendications précédentes, dans lequel les deux électrodes (19,20) sont directement moulées, dans une languette plastique (21) solidarisée avec la paroi interne (81) de la partie médiane (7) du boîtier.

5. Filtre selon l'une quelconque des revendications 1 à 3, dans lequel les deux électrodes (19,20) sont directement moulées dans la paroi interne (81) de la partie médiane (7) du boîtier.

6. Filtre selon l'une quelconque des revendications précédentes, dans lequel les parties supérieure (3) et médiane (7,8) du boîtier sont réalisées d'une seule pièce tandis que la partie inférieure (3) dudit boîtier est rapportée de manière amovible sur la partie médiane (7,8) du boîtier et les extrémités supérieures (19a,20a) des deux électrodes (19,20) sont fixées sur la plaque de circuit imprimé (22).

7. Filtre selon l'une quelconque des revendications 1 à 5, dans lequel les parties inférieure (11) et médiane (7,25) du boîtier sont solidaires l'une de l'autre et la partie médiane (7,25) est montée de manière amovible sur la partie supérieure (3) du boîtier, les extrémités supérieures (19a,20a) des deux électrodes (19,20) étant solidaires de l'extrémité supérieure (25d,27a) de la partie médiane (7,25) du boîtier, et dans lequel le circuit imprimé (22) comporte deux organes de connexion (28) sollicités élastiquement contre les extrémités supérieures (19a,20a) des deux électrodes (19,20), lors de la mise en place de la partie médiane (7,25) du boîtier sur la partie supérieure (3).

8. Filtre selon l'une quelconque des revendications précédentes, dans lequel l'élément filtrant (9) présente une forme annulaire et délimite intérieurement la zone d'aval (17b) qui communique de manière étanche avec un conduit central (14) réalisé sur la partie supérieure (3) du boîtier et qui forme la sortie de gazole (16), la plaque de circuit imprimé (22) étant disposée autour de ce conduit central (14).
